# EUROPEAN PATENT SPECIFICATION

(11) **EP 3 195 130 B1**
(45) Date of publication and mention of the grant of the patent: **06.11.2019**
(21) Application number: 16754736.3
(22) Date of filing: 26.01.2016
(51) Int. Cl.: H04L 29/08, G06F 12/126

(54) **METHOD AND SYSTEM FOR SMART OBJECT EVICTION FOR PROXY CACHE**
VERFAHREN UND SYSTEM ZUR INTELLIGENTEN OBJEKTENTFERNUNG FÜR EINEN PROXY-CACHE
PROCÉDÉ ET SYSTÈME D'ÉVICTION INTELLIGENTE D'OBJETS D'UNE MÉMOIRE CACHE PROXY

(30) Priority: 27.02.2015 US 201514634149
(43) Date of publication of application: 26.07.2017
(73) Proprietor: Huawei Technologies Co. Ltd., Shenzhen, Guangdong 518129 (CN)
(72) Inventor: KOVVURI, Vaishnav, Shenzhen, Guangdong 518129 (CN); ZHAO, Jim, Los Altos, California 94024 (US)
(74) Representative: Pfenning, Meinig & Partner mbB
(86) International application number: PCT/CN2016/072184
(87) International publication number: WO 2016/134627

(56) References cited:
- CN-A- 102 063 462
- US-A1- 2012 158 815
- US-A1- 2014 082 288
- US-A1- 2014 195 750
- US-B1- 6 425 057
- RASHKOVITS RAMI ED - NEPAL SURYA ET AL: "Preference-based content replacement using recency-latency tradeoff", WORLD WIDE WEB, BALTZER SCIENCE PUBLISHERS, BUSSUM, NL, vol. 19, no. 3, 11 December 2014 (2014-12-11), pages 323-350, XP035935958, ISSN: 1386-145X, DOI: 10.1007/S11280-014-0313-1 [retrieved on 2014-12-11]
- CHA H ET AL: "Replacing media caches in streaming proxy servers", JOURNAL OF SYSTEMS ARCHITECTURE, ELSEVIER BV, NL, vol. 52, no. 1, 1 January 2006 (2006-01-01), pages 25-40, XP028035547, ISSN: 1383-7621, DOI: 10.1016/J.SYSARC.2005.02.006 [retrieved on 2006-01-01]

## Description

### FIELD OF THE INVENTION

Embodiments of the present invention relate to communication networks including a wide area network (WAN), and especially to the eviction of objects at a proxy cache located at a local site that is remote from a back end data server.

### BACKGROUND

Businesses today are not located at a single location, but are dispersed across many offices around the globe. Remote offices access data across a WAN from their "data centers" located at a headquarter location, or in a cloud. That is, users at a remote office will perform operations on the data that is stored in the data center. This may require multiple round trip transactions between the user at the remote office and the data center to perform a single operation.

However, WAN has latency and bandwidth issues which adversely affect the user experience when performing operations on data located at a data center. For example, the WAN is generally unreliable, and has less bandwidth. In order to work around these latency and bandwidth issues, many storage enterprises deploy proxies that are configured to have caching capabilities. In that manner, when a user at a remote office is performing operations on data, those operations are performed on the data that is delivered to a local proxy.

In particular, applications use file sharing protocols which were originally designed for local access (e.g., such as over a local area network [LAN]), but are now used in the WAN environment. In order to circumvent performance issues, intermediate caching devices are installed to cache objects. For example, these caches can be both "read" and "write" caches that cache data for a better user experience and provide better data consistency and data coherency.

The intermediate caches have limited storage space, and typically are much smaller than the back end data center. Over time these intermediate caches do not have adequate storage space to accept new data. As such, eviction algorithms are implemented to create space in the intermediate cache. For example, data which are no longer used are evicted based on existing well known eviction algorithms. However, these algorithms may inadequately manage the eviction process. For example, the eviction algorithms may aggressively evict data, which adversely causes high network usage when the same file is transferred repeatedly from the back end data center.

US 2014/082288 A1 named "System and method for operating a system to cache a networked file system has proposed a network attached storage (NAS) caching appliance, system, and associated method of operation for caching a networked file system. Still further, some embodiments provide for a cache system that implements a mufti-tiered, policy-influenced block replacement algorithm.

US6425057 B1 named "caching protocol method and system based on request frequency and relative storage duration" has proposed A method and

system for caching objects and replacing cached objects in an object-transfer environment maintain a dynamic indicator (Pr(f)) for each cached object, with the dynamic indicator being responsive to the frequency of requests for the object and being indicative of the time of storing the cached object relative to storing other cached objects.

US 2012/0158815 A1 named "System and method for identifying web objects unworthy of being cached" has proposed a caching device is configured to determine whether an object received or currently stored at the caching device should be (or continue to be) cached at the caching device, even if the object is otherwise cacheable. If so, the object is cached (or retained) at the caching device, otherwise, it is not. The determination as to whether or not the object should be cached or, if already cached, retained at the caching device may be made on the basis of a worthiness determination which evaluates the object on the basis of one or more parameters or attributes of the object, which worthiness may be one part of an overall value determination for the object.

### SUMMARY

An object of the present invention is a method as claimed in claim 1. Another object of the invention is a system as claimed in claim 9. Preferred embodiments are covered by the appended dependent claims.

In some embodiments of the present invention, a method for managing a local cache is disclosed. The method includes receiving an object from a back end server at a local cache for access by one or more users at a local site. The method includes attaching an eviction policy parameter value to the object. The method includes storing the object in the local cache. The method includes evaluating at the local cache the eviction policy parameter value. The method includes evicting the object from the local cache based on the eviction policy parameter. Said attaching an eviction policy parameter value further comprises: determining that said object has been previously evicted from said local cache, wherein said eviction policy parameter value previously assigned to said object comprises a first period of time; determining that a request to open said object occurs within a period extending after said evicting said object from said local cache; and setting said eviction policy parameter value to an expiry period of a second period of time that is longer than said first period of time; or, wherein said attaching an eviction policy parameter value further comprise: determining that said object has been previously evicted from said local cache, wherein said eviction policy parameter value previously assigned to said object comprises a priority weight, wherein the priority weight assigned to an object provides an indication as to its priority of importance; determining that said request to open said object occurs within a period extending after said evicting said object from said local cache; and adjusting higher said priority weight previously assigned to said object to assign it more priority and creating an adjusted priority weight; and setting said eviction policy parameter value to said adjusted priority weight.

In one embodiment, another method for managing storage in local cache is disclosed. The method includes monitoring a plurality of objects stored in the local cache. The plurality of objects is accessible by users at a local site. The method includes detecting an eviction trigger event. The method includes applying a first eviction policy

on the plurality of objects stored in the local cache to determine a selected object for eviction. The method includes evicting the selected object.

In still another embodiment, a computer system is disclosed. The computer system includes a processor that is configured to receive an object from a back end server at a local cache for access by one or more users at a local site. The processor is configured to attach an eviction policy parameter value to the object. The processor is configured to store the object in the local cache. The processor is configured to evaluate at the local cache the eviction policy parameter, and evict the object from the local cache based on the eviction policy parameter. Said attaching an eviction policy parameter value further comprises: determining that said object has been previously evicted from said local cache, wherein said eviction policy parameter value previously assigned to said object comprises a first period of time; determining that a request to open said object occurs within a period extending after said evicting said object from said local cache; and setting said eviction policy parameter value to an expiry period of a second period of time that is longer than said first period of time; or, wherein said processor when performing said attaching an eviction policy parameter value is further configured to: determining that said object has been previously evicted from said local cache, wherein said eviction policy parameter value previously assigned to said object comprises a priority weight, wherein the priority weight assigned to an object provides an indication as to its priority of importance; determining that said request to open said object occurs within a period extending after said evicting said object from said local cache; and adjusting higher said priority weight previously assigned to said object to assign it more priority and creating an adjusted priority weight; and setting said eviction policy parameter value to said adjusted priority weight.

These and other objects and advantages of the various embodiments of the present disclosure will be recognized by those of ordinary skill in the art after reading the following detailed description of the embodiments that are illustrated in the variousdrawing figures. The scope of the invention is defined by the appended claims.

### BRIEF DESCRIPTION

The accompanying drawings, which are incorporated in and form a part of this specification and in which like numerals depict like elements, illustrate embodiments of the present disclosure and, together with the description, serve to explain the principles of the disclosure.
FIG. 1 is diagram of a communication network including a back end data center communicatively coupled to a local site over a WAN, wherein the local site is configured to provide automatic cache utilization and cache management of a local cache, in accordance with one embodiment of the present disclosure.
FIG. 2 is a diagram illustrating the variety of information used when implementing an eviction process at a local cache, in accordance with one embodiment of the present disclosure.
FIG. 3 is a message flow diagram illustrating the implementation of an eviction process at a local cache, in accordance with one embodiment of the present disclosure.
FIGS. 4A, 4B, 4C, and 4D are flow diagrams illustrating computer controlled methods for implementing object eviction at a local cache, in accordance with one embodiment of the present disclosure.

### DETAILED DESCRIPTION

Reference will now be made in detail to the various embodiments of the present disclosure, examples of which are illustrated in the accompanying drawings. While described in conjunction with these embodiments, it will be understood that they are not intended to limit the disclosure to these embodiments. On the contrary, the disclosure is intended to cover alternatives, modifications and equivalents, which may be included within the scope of the invention as defined by the appended claims.
Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

Accordingly, embodiments of the present invention provide for automatic cache utilization and cache management. Embodiments give more control to a user/administrator to determine which collection of objects will be evicted, and in what order based on information. That is, eviction policies are facilitated by placing eviction metadata information into objects stored at a local cache. For example, extended object attributes include expiry time and priority weights. In addition, expiry time for an object may be adjusted based on a history of eviction for that object. Also, network bandwidth is considered when performing eviction, since a cache communicates with multiple back end file servers over communication paths having varying network bandwidths. All of these eviction polices allow for improved cache management.

Some portions of the detailed descriptions which follow are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer generated step, logic block, process, etc., is here, and generally, conceived to be a self-consistent sequence of steps or instructions leading to a desired result. The steps are those requiring physical manipulations of physical quantities, and refer to the action and processes of a computing system, or the like (e.g., a processor), configured to manipulate and transform data represented as physical (electronic) quantities within the computer system's registers and memories into other data similarly represented as physical quantities within the computer system memories or registers or other such information storage, transmission or display devices.

Flowcharts of examples of methods for cache management including continuous eviction of objects according to one or more eviction polices, according to embodiments of the present invention. Although specific steps are disclosed in the flowcharts, such steps are exemplary. That is, embodiments of the present invention are well-suited to performing various other steps or variations of the steps recited in the flowcharts. Also, embodiments described herein may be discussed in the general context of computer-executable instructions residing on some form of computer-readable storage medium, such as program modules, executed by one or more computers or other devices. By way of example, and not limitation, the software product may be stored in a nonvolatile or non-transitory computer-readable storage media that may comprise non-transitory computer storage media and communication media.

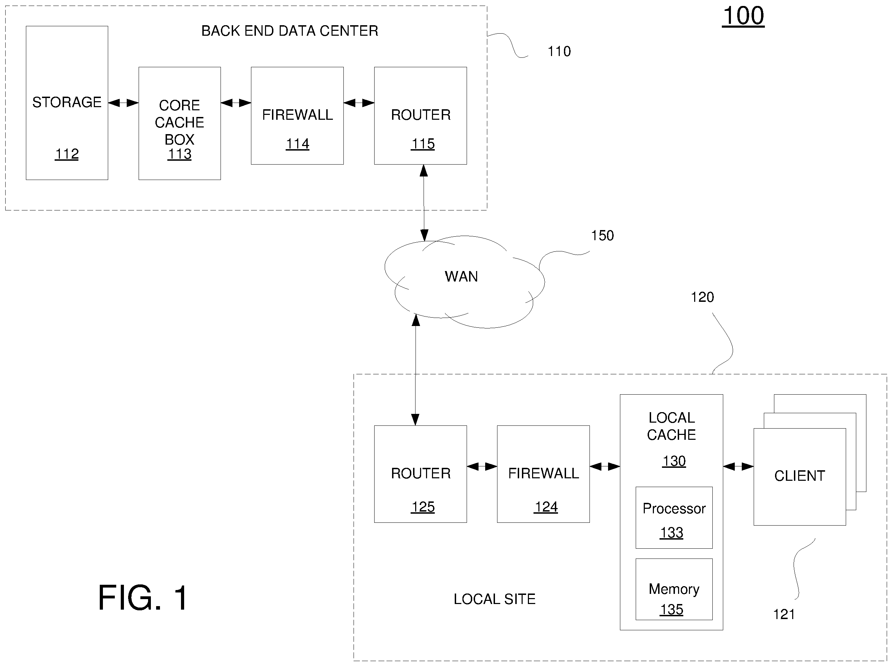

FIG. 1 is a diagram of a communication network 100 including a back end data center 110 communicatively coupled to a local site 120 over a WAN 150, wherein the local site 120 is configured to provide automatic cache utilization and cache management of a local cache 130, in accordance with one embodiment of the present disclosure.

In particular, communication network 100 illustrates an enterprise data storage solution, wherein data center 110 provides the primary storage for all objects accessible within the enterprise solution. That is, data center 110 provides a centralized location for a plurality of objects that are accessed by client devices at one or more local sites 120. In addition, one or more data centers 110 may be synchronized to provide multiple access points used for accessing data, or to extend the storage platform for storing a larger universe of objects. To address the latency and decreased bandwidth issues of the WAN 150, intermediate caching devices are located at the local site 120. For example, local cache 130 is used to temporarily store objects that are opened and accessed by a plurality of client devices 121 at the local site (e.g., a local office that is remote from the back end data center 110).

As shown in FIG. 1, the back end data center 100 includes storage 112 that is sufficiently large to accommodate one or more local sites. For example, in an enterprise storage system, the data center 110 can have storage space of 100 terabytes or more. Data center 100 includes a WAN optimization, Core Cache box 113 that is used to store objects being stored into storage 112, and accessed from storage 112, in order to increase the performance of data center 110. A firewall 114 provides network security by controlling the incoming and outgoing network traffic. For example, firewall 114 provides a barrier that allows communication to flow into and out of the firewall 114 when security rule sets have been satisfied. A router 115 is included within the data center 110 to provide packet forwarding between devices located in different networks (e.g., across multiple LANs or WANs).

Back end data center 110 is communicatively coupled to the local site 120 via a communication network, such as WAN 150. For example, network 150 is used to deliver objects between the back end data center 110 and local site 120. In that manner, when a user at a client device opens an object at the local site 120 to perform operations (e.g., read or write), that object is delivered to the local cache 130. As such, performance issues due to round trips taken over the WAN 150 are significantly reduced since the object is localized, and is now being accessed over a much more efficient LAN.

Local site includes a router 125 to receive and forward packets. For example, router 125 is configured to receive incoming objects from the data center 110 over WAN 150, and to forward outgoing objects to the data center 110 over WAN 150. Firewall 124 provides security for the local site 120, and provides a barrier that allows secure communication to flow into and out of the firewall 124. Local cache 130 is used to store objects that are accessed locally by the plurality of client devices 121. In one implementation, client devices 121 are thin clients that have low memory and rely on back end storage for storing objects that are accessed and/or modified using the client devices 121.

Local cache 130 is configured to implement automatic cache utilization and cache management. For example, local cache is 130 is configurable to implement one or more cache eviction policies on a plurality of stored object on a continual basis, instead of waiting for the cache to be too full to accept new objects.

Local cache 130 may include a processor 133 and memory 135, wherein the processor 133 is configured to execute computer-executable instructions stored in the memory 135, such as those provided by a cache controller (not shown). Processor 133 and memory 135 may also be located remote from local cache 130. Processor 133 is configured to implement cache eviction policies in order to evict objects on a continual basis. The eviction policies are facilitated by placing eviction metadata information into objects stored at a local cache. For example, extended object attributes include expiry time and priority weights. In addition, expiry time for an object may be adjusted based on a history of eviction for that object. Also, network bandwidth is considered when performing eviction, since a cache communicates with multiple back end file servers over communication paths having varying network bandwidths. Further, the processor 133 is configurable to provide an interface which gives more control to a user/administrator to determine which collection of objects will be evicted, and in what order based on information.

In one embodiment, the processor 133 is configured to perform the functions of one or more of the example embodiments described and/or illustrated herein, such as the cache eviction polices. Further, the processor 133 may be included within a single or multi-processor computing device or system capable of executing computer-readable instructions. In its most basic form, a computing device may include at least one processor and a system memory. System memory is coupled to processor, and generally represents any type or form of volatile or non-volatile storage device or medium capable of storing data and/or other computer-readable instructions. Examples of system memory include, without limitation, random access memory (RAM), read only memory (ROM), Flash memory, or any other suitable memory device.

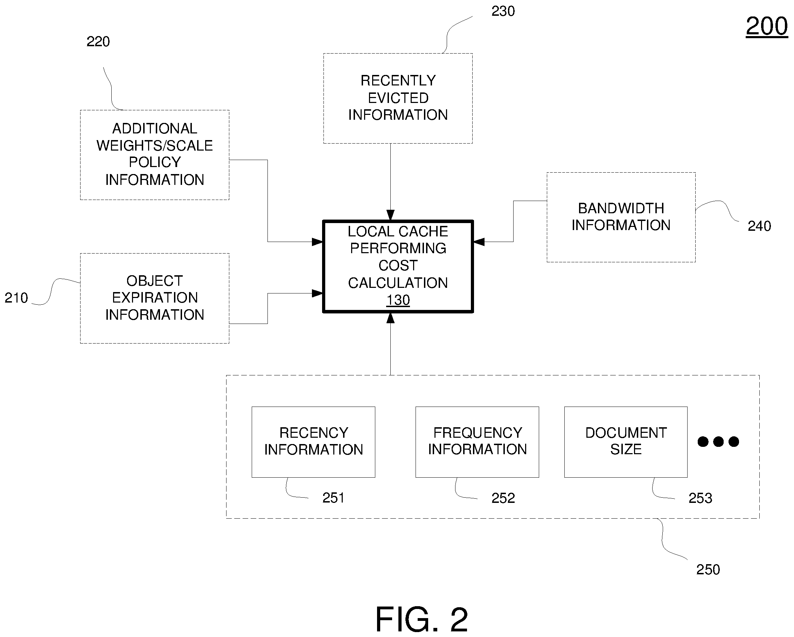

FIG. 2 is a diagram 200 illustrating the variety of information used when implementing an eviction process at a local cache, in accordance with one embodiment of the present disclosure. In particular, the processor of a local cache performs cost calculation in order to implement one or more eviction policies that are used and in what order in order to perform eviction of objects in the local cache. In one embodiment, a user administrator can provide input as to which eviction policies are used over other eviction policies, and in what priority.

Local cache 130 receives a variety of information, each of which may be suitable for use in one or more eviction policies. For example, local cache 130 may receive information including recency information 251, frequency information 252, document size 253, as well as other pieces of information that may be used by existing eviction technologies 250. For illustration, the least recently used (LRU) technology uses recency information 251 to determine the file with the oldest access time for eviction purposes. The least frequently used (LFU) technology uses frequency information 252 to determine the file that is the least popular for eviction purposes. Document size 253 information may also be used to evict the largest object. Other information includes time since the last access, number of accesses, document cost, inflation value, number of aged references, etc.

Local cache 130 receives object expiration information 210 when performing an eviction cost calculation. In particular, expiry information gives each object stored in local cache an expiry period. This is attached as an extension to the object regardless of the object format (e.g., how the object was delivered over the WAN), and/or regardless of the protocol used to fetch the object. The expiry eviction policy evicts objects after expiration of their corresponding expiry period.

Local cache 130 receives additional weight/scale information 220 when performing an eviction cost calculation. In particular, a weight or scale assigned to an object provides an indication as to its priority of importance. For example, an object with a higher weight or scale may be more important than an object with a lower weight or scale. As an illustration, a user or administrator can select object and assign relative weights according to their type (e.g., a value of 5 is most cacheable, whereas a value of 1 is least cacheable). Objects that are *.mp3 files (e.g., music files) may be less important than document files. In addition, the weights can be assigned to objects that are files or folders, for example. These weights or scales may be implemented using a variety of techniques. In that manner, a level of importance can be assigned to each object. The weight/scale policy evicts objects with least importance (e.g., least cacheable) before evicting objects with higher importance.

Local cache 130 keeps track of recently evicted information 230 when performing an eviction cost calculation. That is, the history of evicted objects is tracked in a sliding window. As such, an object that was recently evicted and then reaccessed from a back end data center within a sliding window (e.g., 3 weeks) may be given a higher level of importance than evicted files that are not reaccessed within a sliding window. That is, that file is a prime candidate for non eviction after its current expiry period has expired. As such, the expiry period or priority level of importance (e.g., weight) for that object may be adjusted to reflect its elevated importance. The sliding window policy uses a history profile of access patterns of recently evicted objects as feedback when considering whether or not to adjust the expiry period for an object.

Local cache 130 computes or determines bandwidth information 240 when performing an eviction cost calculation. That is, a local site may be communicatively coupled to one or more data centers. Network bandwidth between the local cache and each of the back end servers is continuously computed or determined over the communication path between the local site and each data center. This network bandwidth is considered when determining which object is most suitable for eviction from local cache. That is, continual measurement of bandwidth to each back end server is maintained, and is factored when performing cache eviction. For example, two objects may be considered for eviction, wherein the objects are relatively the same size, but originating from different back end data centers. In that case, the object coming from a data center over a communication path having a higher bandwidth may be evicted over the other object coming from another data center over another communication path having a lower bandwidth. This is because the selected object is more readily accessed over a path having higher bandwidth, and the cost for reaccessing the selected file is less than the cost for reaccessing the other file.

As shown in FIG. 2, embodiments of the present invention are able to use expiry 210, priority weight 220, sliding window 230, and network bandwidth 240 information as well as information from existing eviction technologies 250 when determining which objects or objects should be evicted from local cache.

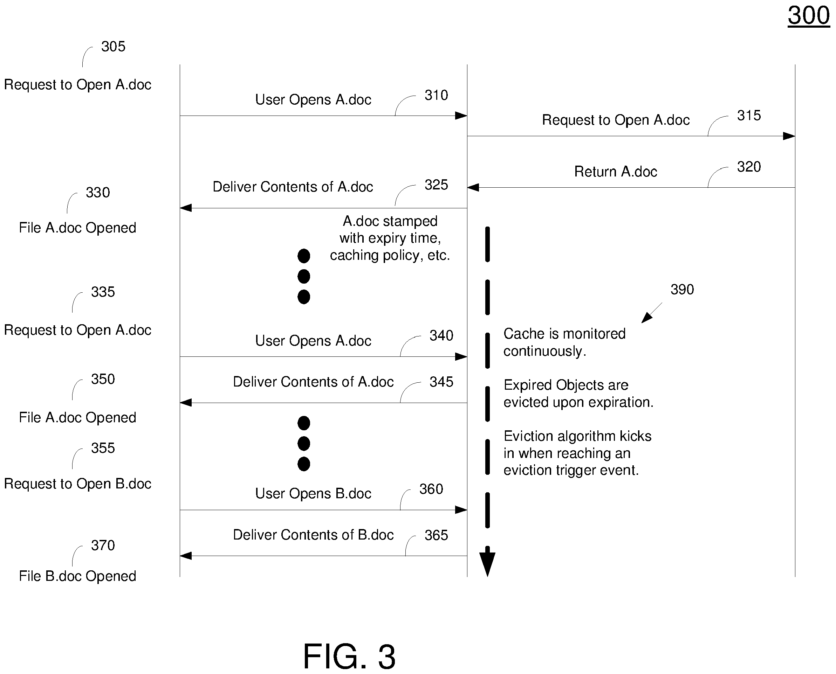

FIG. 3 is a message flow diagram 300 illustrating the implementation of an eviction process at a local cache, in accordance with one embodiment of the present disclosure. The messages shown in FIG. 3 are delivered between a client device located at a local site, a local caching device also located at the local site, and a file server located at a back end data center. The local caching device acts as an intermediate cache for storing objects that are accessed by users through localized client devices. In that manner, by accessing objects stored at the intermediate cache instead of at the back end file server, a user perceived performance is greatly improved.

In particular, the client device receives and/or generates a request to open an object, hereinafter referred to as "A.doc." The request is delivered to the local caching device at 310, where it is determined if A.doc is stored locally. If A.doc. is not locally stored, then the request to open A.doc is delivered to the back end file server at 315. At that point, the file server returns A.doc back to the local cache at 320.

The local cache applies one or more eviction policy parameter values (e.g., expiry period, priority value, etc.) to the object. In addition, other caching policy information may also be included to aid in determining which eviction policy or policies from a plurality of eviction polices are used and in what order. As such, at 325, the A.doc object is delivered back to the client device.

At 330, the client device opens A.doc for access and manipulation by the user. By locating A.doc at the local cache, the user is able to efficiently access and manipulate the object without having to incur the latency and small bandwidth issues experienced when sending transaction instructions back-and-forth between the local site and the back end file server.

At 390, FIG. 3 shows that the local cache continuously implements one or more eviction polices. Specifically, the local cache is continuously monitored to determine when an eviction trigger event has occurred. For example, expiry periods are monitored to determine which objects should be evicted upon expiration - the trigger event. Also, available space is monitored in the local cache to determine when a water mark has been reached, upon which one or more eviction polices are performed to increase the available space.

After a period of time, at 335 the object A.doc may be reaccessed by the same user or another user at the local site. In particular, the client device receives and/or generates a request to open A.doc. The request is delivered to the local cache device at 340, where it is determined if A.doc is stored locally. Since the object is stored in local cache, the contents of A.doc may be accessed from local cache and delivered back to the client device, without going back to the file server to retrieve the object. This saves latency issues because there is no need to go over the WAN to retrieve the object. At 350, the client device is configured to open A.doc for access and manipulation by the user.

For illustration, after a period of time, at 355 a request to open object "B.doc" may be generated at the client device. That is, a user would like to access B.doc. The request is delivered to the local cache device at 360, where it is determined if B.doc is stored locally. In this case, B.doc is stored in local cache. Since the object is stored locally, the contents of B.doc may be accessed from local cache and delivered back to the client device, without going back to the file server to retrieve the object.

It is important to note that while client devices are opening one or more objects, the eviction process illustrated at 390 is continuously being performed. That is, the local cache is continously monitored to determine whether any trigger events have occurred necessitating the eviction of an object, or the performance of one or more eviction policies to evict one or more objects stored in local cache.

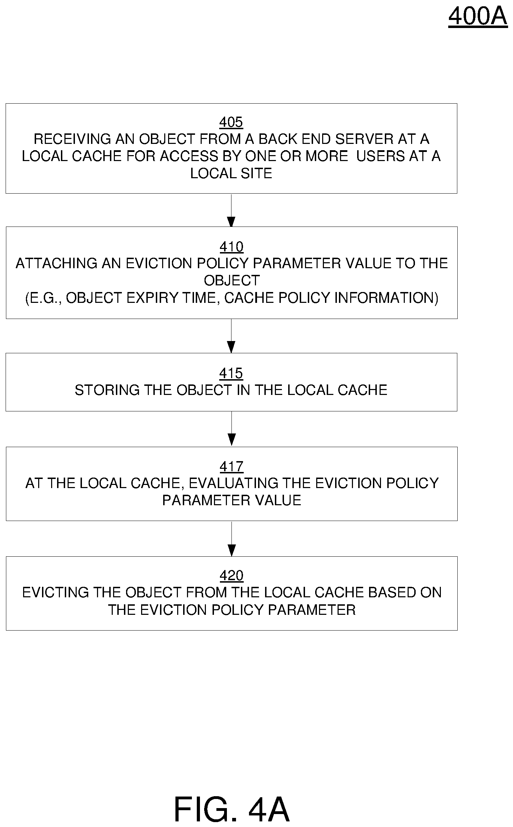

FIG. 4A is a flow diagram 400A illustrating a method for implementing object eviction at a local cache, in accordance with one embodiment of the present disclosure. In one embodiment, flow diagram 400A illustrates a computer implemented method for implementing object eviction at a local cache. In another embodiment, flow diagram 400B is implemented within a computer system including a processor and memory coupled to the processor and having stored therein instructions that, if executed by the computer system causes the system to execute a method for implementing object eviction at a local cache. In still another embodiment, instructions for performing the method are stored on a non-transitory computer-readable storage medium having computer-executable instructions for causing a computer system to perform a method for implementing object eviction at a local cache. The operations of flow diagram 400A are implemented within the local cache 130 (e.g., within a controller) of FIGS. 1 and 2, in some embodiments of the present disclosure.

As shown in FIG. 4A, the method includes receiving an object from a back end server (e.g., data center) at a local cache at 405. The object is accessible by one or more users at a local site. As previously discussed, the user experience is greatly improved by allowing the user to access and manipulate the object that is stored locally in local cache. The object is later stored back at the data center for permanent storage.

The method includes attaching an eviction policy parameter value to the object at 410. For example, in one implementation, the parameter value is an expiry period. An expiry period of a first period of time is attached to the object that is stored in local cache after receipt by the local cache. That is, an extension is introduced into the object to accommodate the expiry period. This extension is applied to the object no matter what format the file is generated under, e.g., for delivery over the WAN. More specifically, the object expiry period is not a protocol specific attribute.

In another implementation, the eviction policy parameter value is a priority value. That is, the priority value provides an indication as to the importance level for that object. As previously described, the priority value may include a priority weight. For illustration, an object with a higher priority weight shows more importance than an object with a lower priority weight. Still other types of eviction policy values may be assigned to the object.

At 415, the method includes storing the object in the local cache. This is performed to avoid any latency and bandwidth issues that may plague a storage enterprise system that relies on storing objects only at a back end data center.

At 417, the method includes evaluating the eviction parameter value. For example, eviction policies are implemented through continuous monitoring of objects within the local cache.

At 420, the method includes evicting the object from the local cache based on the eviction policy parameter. For instance, the local cache and objects contained within the cache are continuously monitored to determine when to evict one or more files. Objects are evicted by performing one or more eviction policies, and after considering the eviction policy parameter values that are assigned to each of the objects stored in the local cache.

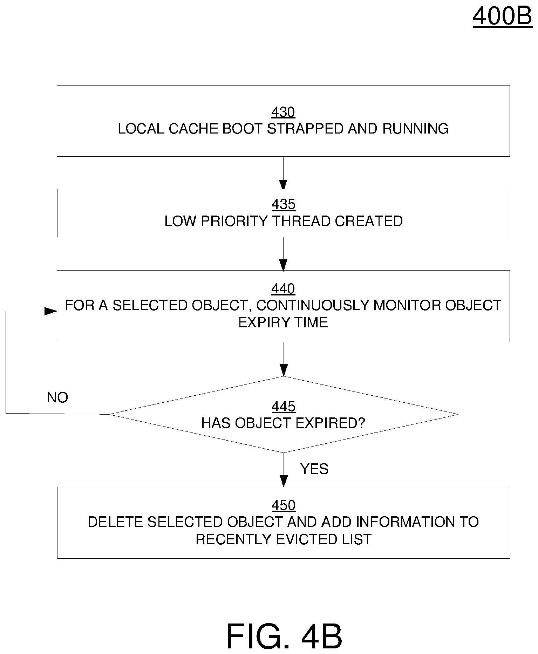

FIG. 4B is a flow diagram 400B illustrating a method for performing eviction based on a expiry period assigned to each object stored in a local cache, in accordance with one embodiment of the present disclosure. In embodiments, flow diagram 400B illustrates a computer implemented method, a computer system performing a method, or instructions for performing a method stored on a non-transitory computer-readable storage medium, wherein the method performs performing eviction based on a expiry period assigned to each object stored in a local cache. The operations of flow diagram 400B are implemented within the local cache 130 (e.g., within a controller) of FIGS. 1 and 2, in some embodiments of the present disclosure.

At 430, the local cache is boot strapped and initiated. That is, the local cache undergoes a booting up process. At 435, a low priority thread is created and continuously runs in the background. For example, the low priority thread continuously monitors the local cache in order to implement a specific eviction policy.

In particular, at 440, the method includes continously monitoring an object. For example, the method includes crawling through object space to determine which object to evict. More specifically, the operation performed at 440 allows for the monitoring of one or more objects stored in local cache to determine which ones are candidates for eviction. The process shown in FIG. 4B focuses on one selected object to determine whether or not to evict that object.

At decision step 445, the method determines whether the object has expired. In particular, it is determined whether or not the expiry period for the object has expired. If the expiry period has not expired, then the method returns back to 440.

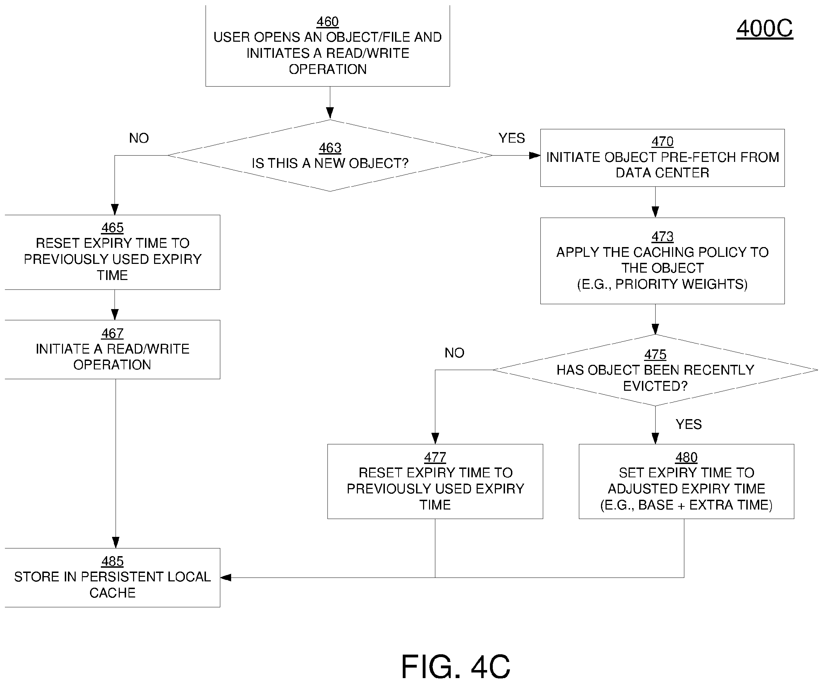

On the other hand, if the expiry period has expired, then the method continues to 450, where the object is deleted or evicted from the local cache. For example, if the expiry period is a first period of time, then expiration occurs after the first period of time has elapsed since being set. In addition, information related to the eviction of the file is stored for purposes of tracking the history of evicted files. For example, the time of eviction is noted and stored. In addition, other information may be stored, such as information identifying the object, eviction policy parameter values, and other eviction policy information, as well as other pertinent information. Use of the information stored in the eviction tracking history may be used for implementation of future eviction strategies, as will be further described in FIG. 4C.

FIG. 4C is a flow diagram 400C illustrating a method for adjusting eviction policy parameters for objects stored in local cache by considering eviction tracking history information, in accordance with one embodiment of the present disclosure. In embodiments, flow diagram 400C illustrates a computer implemented method, a computer system including a processor and memory for implementing a method, and instructions stored on non-transitory computer-readable medium for performing a method, wherein the method adjusts eviction policy parameters for objects stored in local cache by considering eviction tracking history information. The operations of flow diagram 400C are implemented within the local cache 130 (e.g., within a controller) of FIGS. 1 and 2, in some embodiments of the present disclosure.

At 460, the method includes opening an object (e.g., file) and initiating an operation on the object. For instance, the operation may be a "read" or "write" operation. In particular, a request is made at a client device to open the object. The object is opened and locally stored so that the user may access and manipulate the object.

At the time the request is made, the object may or may not be stored in the local cache. At 463, the method determines whether the file is a new object. That is, the method determines whether the file is stored in local cache. When the method determines that the object is not new, or rather is stored in local cache, the method proceeds to 465. In particular, the object is accessed and/or retrieved from local cache, and an eviction policy parameter value from a previously assigned value is updated. For example, the expiry period is reset. That is, the expiry period that was previously used when the object was previously stored is reset. For instance, the expiry period is default value of 30 days, then the expiry period is set to 30 days, beginning from this most recent access. An operation (e.g., read or write) is initiated on the object stored in local cache at 467, and any modifications or updates to the object is stored in persistent local cache at 485.

On the other hand, if the object is new, or rather is not stored in local cache, then the method proceeds to 470, where the object is pre-fetched from the back end data center, or file server. Specifically, a request is delivered to the data center for the object. At 473, the method includes attaching an eviction policy parameter value to the object. For example, in one implementation, the parameter value is an expiry period, as previously described. In another implementation, the parameter value is a priority value (e.g., weight) that provides an indication as to the importance level for the object. In one embodiment, extensions to the object are used to apply the parameter value or values.

At decision step 475, the method includes determining whether the object has been recently evicted. This is accomplished by accessing the eviction tracking history information. In particular, a sliding window may be applied to evicted files, and considered at 475. For example, an object that has not been recently evicted indicates that either the object is a new object (e.g., never stored in local cache), or the object was evicted before the sliding window interval. For a previously evicted object, the object is not currently accessed within a sliding window (e.g., 30 day period) beginning from when the object was last evicted. In this case, the method continues to 477 and an eviction policy parameter value from a previously assigned value is updated. For example, the expiry period is reset. That is, the expiry period that was previously used when the object was previously stored is reset. Thereafter, the object is stored in persistent local cache at 485.

On the other hand, if the object has been recently evicted, then the method proceeds to 480. In particular, if the object is again fetched within the sliding window, then the expiry time for that object is extended by some amount. In particular, the method determines that the object has been previously evicted from the local cache and the most recent request to open the object occurs within a period (e.g., sliding window) after the eviction from the local cache.

In one implementation, at 480 the eviction policy parameter value is set. For example, an expiry period previously assigned to the object is extended by some amount. As such, the parameter value is set to the expiry period plus the extension. Thereafter, the object is stored into local cache.

In another implementation, at 480, a priority value for the eviction policy parameter value is adjusted to reflect a higher priority. That is, since the object is reaccessed within the sliding window, that object may be valued more by one or more users at the local site over other less accessed objects. In that case, the eviction policy parameter value is set to the adjusted priority value. Thereafter, the object is stored into local cache.

In addition, before evicting any object, a last measured network bandwidth is taken into consideration. For example, re-fetching a first object from a back end file server that its associated with a low network bandwidth will take longer than re-fetching a second object from a second back end file server that is associated with a higher network bandwidth. As such, the second object is selected over the first object for eviction, since it will take less time to retrieve the second object from the second file server. This provides the best user experience when opening an object that is not stored in local cache.

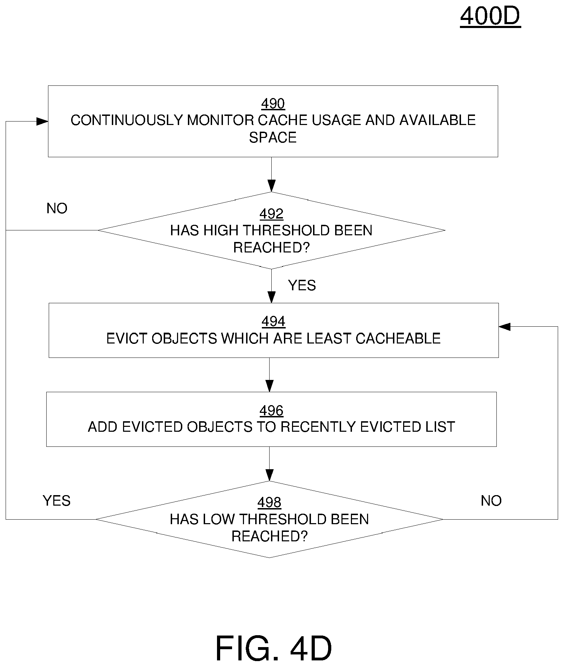

FIG. 4D is a flow diagram illustrating a method for performing an eviction policy upon the detection of an event, in accordance with one embodiment of the present disclosure. In embodiments, flow diagram 400D illustrates a computer implemented method, a computer system including a processor and memory for implementing the method, and instructions stored on a non-transitory computer-readable storage medium for performing a method, wherein the method adjusts eviction policy parameters for performing an eviction policy upon the detection of an event. The operations of flow diagram 400D are implemented within the local cache 130 (e.g., within a controller) of FIGS. 1 and 2, in some embodiments of the present disclosure.

At 490, the method includes the continuous monitoring of the usage of a local cache, and the available space in the local cache. In particular, the method is monitoring the local cache to detect an eviction trigger event. In one implementation, the trigger event is the expiration of an expiry period for an object, as previously described, but could be any trigger event. In another implementation, the trigger event is reaching a threshold value for storage. In still another implementation, the trigger event includes determining that available capacity of the local storage cannot accommodate an incoming object. The method includes applying a first eviction policy on a plurality of objects that is stored in the local cache to determine a selected object for eviction. Thereafter, the object is evicted.

For example, as shown in FIG. 4D, at decision step 492, the method determines whether a threshold capacity value for storage in the local cache has been reached. For example, in one case, the threshold value is a high water mark (e.g., 95 percent). In another case, the threshold value is a lower water mark (e.g., 75 percent) implemented to provide enough time to evict objects before the local cache is completely full. If the threshold value has not been reached, the method returns back to 490.

On the other hand, if the threshold value has been reached, the method proceeds to 494, where objects that are least cacheable are selected and evicted. For example, the least cacheable objects include those whose characteristics include one or more of the following: where an expiry period has expired, or where a selected object has the lowest priority value, or where the selected object is sourced at an associated back end server connected to the local cache over a connection having a highest bandwidth, as previously described.

At 496, the evicted objects are added to a recently evicted list. In that manner, eviction information for those objects are stored and tracked. Any evicted object reaccessed within a sliding window after its eviction may take on an higher importance, as reflected in an adjusted expiry time period, or adjusted priority weight value, as previously described.

At 498, the method evicts objects until reaching a low threshold value (e.g., low water mark). Once the low threshold value has been reached, the method returns to 490. On the other hand, the low threshold value has not been reached, the method returns to 494 and continues to evict objects.

Thus, according to embodiments of the present disclosure, systems and methods are described for automatic cache utilization and cache management, including the implementation of object eviction at a local cache.

While the foregoing disclosure sets forth various embodiments using specific block diagrams, flowcharts, and examples, each block diagram component, flowchart step, operation, and/or component described and/or illustrated herein may be implemented, individually and/or collectively, using a wide range of hardware, software, or firmware (or any combination thereof) configurations. In addition, any disclosure of components contained within other components should be considered as examples because many other architectures can be implemented to achieve the same functionality.

The process parameters and sequence of steps described and/or illustrated herein are given by way of example only and can be varied as desired. For example, while the steps illustrated and/or described herein may be shown or discussed in a particular order, these steps do not necessarily need to be performed in the order illustrated or discussed. The various example methods described and/or illustrated herein may also omit one or more of the steps described or illustrated herein or include additional steps in addition to those disclosed.

While various embodiments have been described and/or illustrated herein in the context of fully functional computing systems, one or more of these example embodiments may be distributed as a program product in a variety of forms, regardless of the particular type of computer-readable media used to actually carry out the distribution. The embodiments disclosed herein may also be implemented using software modules that perform certain tasks. These software modules may include script, batch, or other executable files that may be stored on a computer-readable storage medium or in a computing system. These software modules may configure a computing system to perform one or more of the example embodiments disclosed herein. One or more of the software modules disclosed herein may be implemented in a cloud computing environment. Cloud computing environments may provide various services and applications via the Internet. These cloud-based services (e.g., software as a service, platform as a service, infrastructure as a service, etc.) may be accessible through a Web browser or other remote interface. Various functions described herein may be provided through a remote desktop environment or any other cloud-based computing environment.

Although the present invention and its advantages have been described in detail, it should be understood that various changes, substitutions, and alterations can be made herein without departing from the scope of the invention as defined by the appended claims. Many modifications and variations are possible in view of the above teachings. The embodiments were chosen and described in order to best explain the principles of the invention and its practical applications, to thereby enable others skilled in the art to best utilize the invention and various embodiments with various modifications as may be suited to the particular use contemplated.

Moreover, the scope of the present application is not intended to be limited to the particular embodiments of the process, machine, manufacture, composition of matter, means, methods and steps described in the specification.

Embodiments according to the present disclosure are thus described. While the present disclosure has been described in particular embodiments, it should be appreciated that the disclosure should not be construed as limited by such embodiments, but rather construed according to the below claims.

## Claims

1. A method for caching, said method comprising:
Receiving an object from a back end server (110) at a local cache (130) for access by one or more users at a local site (120);
attaching an eviction policy parameter value to said object;
storing said object in said local cache (130);
at said local cache (130), evaluating said eviction policy parameter value; and
evicting said object from said local cache(130) based on said eviction policy parameter value;
the method being **characterized in that** said attaching an eviction policy parameter value further comprises:
determining that said object has been previously evicted from said local cache(130), wherein said eviction policy parameter value previously assigned to said object comprises a first period of time;
determining by applying a sliding window, that a request to open said object occurs within a period corresponding to said sliding window and extending after said previously evicting said object from said local cache(130); and
setting said eviction policy parameter value to an expiry period of a second period of time that is longer than said first period of time;
or, wherein said attaching an eviction policy parameter value further comprises:
determining that said object has been previously evicted from said local cache(130), wherein said eviction policy parameter value previously assigned to said object comprises a priority weight, wherein the priority weight assigned to an object provides an indication as to its priority of importance;
determining, by applying said sliding window, that said request to open said object occurs within a period corresponding to said sliding window and extending after said previously evicting said object from said local cache(130);
adjusting higher said priority weight previously assigned to said object to assign it more priority and creating an adjusted priority weight; and
setting said eviction policy parameter value to said adjusted priority weight.

2. The method of Claim 1, wherein said attaching an eviction policy parameter value further comprises:
assigning a priority weight to said object.

3. The method of Claim 1, further comprising:
receiving a request to open said object;
determining that said object is stored in said local cache(130);
retrieving said object from said local cache(130); and
updating said eviction policy parameter value from a previously assigned value.

4. The method of Claim 1, further comprising:
detecting an eviction trigger event;
applying a first eviction policy on a plurality of objects stored in said local cache(130) to determine a selected object for eviction; and
evicting said selected object.

5. The method of Claim 4, wherein said eviction trigger event comprises one the following events:
reaching a threshold capacity value for storage in said local cache(130);
an expiration of an expiry period; and
determining that available capacity of said local storage is full.

6. The method of Claim 4, wherein said applying a first eviction policy comprises one of the following events:
determining an expiration of an expiry period associated with said selected object;
determining said selected object has a lowest priority weight; and
determining said selected object is sourced at an associated back end server(110) connected to said local cache(130) over a connection having a highest bandwidth.

7. The method of Claim 1, wherein said object comprises a file.

8. The method of Claim 1, wherein said object comprises a folder.

9. A computer system, comprising:
a processor configured to:
receive an object from a back end server(110) at a local cache(130) for access by one or more users at a local site(120);
attach an eviction policy parameter value to said object;
store said object in said local cache(130); and
at said local cache(130), evaluate said eviction policy parameter; and
evict said object from said local cache(130) based on said eviction policy parameter value; the computer system being **characterized in that** said processor when performing said attaching an eviction policy parameter value is further configured to:
determine that said object has been previously evicted from said local cache(130), wherein said eviction policy parameter value previously assigned to said object comprises a first period of time; and
determine, by applying a sliding window, that a request to open said object occurs within a period corresponding to said sliding window and extending after said previously evicting said object from said local cache(130); and
set said eviction policy parameter value to an expiry period of a second period of time that is longer than said first period of time; or
determine that said object has been previously evicted from said local cache(130), wherein said eviction policy parameter value previously assigned to said object comprises a priority weight, wherein the priority weight assigned to an object provides an indication as to its priority of importance;
and determine, by applying a sliding window, that said request to open said object occurs within a period corresponding to said sliding window and extending after said previously evicting said object from said local cache(130); and
adjust higher said priority weight previously assigned to said object to assign it more priority and creating an adjusted priority weight; and
set said eviction policy parameter value to said adjusted priority weight.

10. The computer system of Claim 9, wherein said processor is further configured to:
receive a request to open said object;
determine that said object is stored in said local cache(130);
retrieve said object from said local cache(130); and
update said eviction policy parameter value from a previously assigned value.

11. The computer system of Claim 9, wherein said object said processor is further configured to:
determine that a connection between said back end server and said local cache(130) having a highest bandwidth when evicting said object.

## Patentansprüche

1. Verfahren zum Zwischenspeichern, wobei das Verfahren umfasst:
Empfangen eines Objekts von einem "Back-End-Server" (110) an einem lokalen Zwischenspeicher (130) zum Zugriff durch einen oder mehrere Benutzer an einem lokalen Standort (120);
Anfügen eines Entfernungsrichtlinienparameterwerts an das Objekt;
Speichern des Objekts im lokalen Zwischenspeicher (130);
Auswerten des Entfernungsrichtlinienparameterwerts am lokalen Zwischenspeicher (130) und
Entfernen des Objekts aus dem lokalen Zwischenspeicher (130) auf Grundlage des Entfernungsrichtlinienparameterwerts;
wobei das Verfahren **dadurch gekennzeichnet ist, dass** das Anfügen eines Entfernungsrichtlinienparameterwerts ferner umfasst:
Ermitteln, dass das Objekt vorher aus dem lokalen Zwischenspeicher (130) entfernt wurde, wobei der vorher dem Objekt zugewiesene Entfernungsrichtlinienparameterwert eine erste Zeitspanne umfasst;
Ermitteln, durch Anwenden eines gleitenden Fensters, dass eine Anforderung zum Öffnen des Objekts innerhalb einer Zeitspanne eintritt, die dem gleitenden Fenster entspricht und sich bis nach dem vorangehenden Entfernen des Objekts aus dem lokalen Zwischenspeicher (130) erstreckt; und
Festlegen des Entfernungstichtlinienparameterwerts auf eine Ablaufdauer einer zweiten Zeitspanne, die länger als die erste Zeitspanne ist;
oder wobei das Anfügen eines Entfernungsrichtlinienparameterwerts ferner umfasst:
Ermitteln, dass das Objekt vorher aus dem lokalen Zwischenspeicher (130) entfernt wurde, wobei der vorher dem Objekt zugewiesene Entfernungsrichtlinienparameterwert eine Prioritätsgewichtung umfasst, wobei die einem Objekt zugewiesene Prioritätsgewichtung einen Hinweis auf seine Bedeutungspriorität bietet;
Ermitteln, durch Anwenden des gleitenden Fensters, dass die Anforderung zum Öffnen des Objekts innerhalb einer Zeitspanne eintritt, die dem gleitenden Fenster entspricht und sich bis nach dem vorangehenden Entfernen des Objekts aus dem lokalen Zwischenspeicher (130) erstreckt;
Erhöhen der vorher dem Objekt zugewiesenen Prioritätsgewichtung, um ihm mehr Priorität zuzuweisen und eine angepasste Prioritätsgewichtung zu erstellen; und Festlegen des Entfernungsrichtlinienparameterwerts auf die angepasste Prioritätsgewichtung.

2. Verfahren nach Anspruch 1, wobei das Anfügen eines Entfernungsrichtlimenparameterwerts ferner umfasst:
Zuweisen einer Prioritätsgewichtung zu dem Objekt.

3. Verfahren nach Anspruch 1, ferner umfassend:
Empfangen einer Anforderung, das Objekt zu öffnen;
Ermitteln, dass das Objekt im lokalen Zwischenspeicher (130) gespeichert ist;
Abrufen des Objekts aus dem lokalen Zwischenspeicher (130); und
Aktualisieren des Entfernungsrichtlinienparameterwerts von einem vorher zugewiesenen Wert.

4. Verfahren nach Anspruch 1, ferner umfassend:
Erkennen eines Entfernungsauslöseereignisses;
Anwenden einer ersten Entfernungsrichtlinie auf eine Vielzahl von Objekten, die im. lokalen Zwischenspeicher (130) gespeichert sind, um ein ausgewähltes Objekt zur Entfernung zu ermitteln; und
Entfernen des ausgewählten Objekts.

5. Verfahren nach Anspruch 4, wobei das Entfernungsauslöseereignis eines der folgenden Ereignisse umfasst:
Erreichen eines Schwellenkapazitätswerts zur Speicherung im lokalen Zwischenspeicher (130);
Ablaufen einer Ablaufdauer; und
Ermitteln, dass die verfügbare Kapazität des lokalen Speichers voll ist.

6. Verfahren nach Anspruch 4, wobei das Anwenden einer ersten Entfernungsrichtlinie eines der folgenden Ereignisse umfasst:
Ermitteln eines Ablaufs einer Ablaufdauer, die mit dem ausgewählten Objekt assoziiert ist;
Ermitteln, dass das ausgewählte Objekt eine niedrigste Prioritätsgewichtung aufweist; und
Ermitteln, dass das ausgewählte Objekt an einem zugehörigen "Back-End-Server" (110) bezogen wird, der über eine Verbindung mit einer höchsten Bandbreite mit dem lokalen Zwischenspeicher (130) verbunden ist.

7. Verfahren nach Anspruch 1, wobei das Objekt eine Datei umfasst.

8. Verfahren nach Anspruch 1, wobei das Objekt einen Ordner umfasst.

9. Computersystem, umfassend:
einen Prozessor, der ausgelegt ist:
ein Objekt von einem "Back-End-Server" (110) an einem lokalen Zwischenspeicher (130) zum Zugriff durch einen oder mehrere Benutzer an einem lokalen Standort (120) zu empfangen;
ein Entfernungsrichtlinienparameterwert an das Objekt anzufügen;
das Objekt im lokalen Zwischenspeicher (130) zu speichern; und
den Entfernungsrichtlinienparameterwert am lokalen Zwischenspeicher (130) auszuwerten; und
das Objekt auf Grundlage des Entfernungsrichtlinienparameterwerts aus dem lokalen Zwischenspeicher (130) zu entfernen;
wobei das Computersystem **dadurch gekennzeichnet ist, dass** der Prozessor beim Durchführen des Anfügens eines Entfernungsrichtlinienparameterwerts ferner ausgelegt ist:
zu ermitteln, dass das Objekt vorher aus dem lokalen Zwischenspeicher (130) entfernt wurde, wobei der vorher dem Objekt zugewiesene Entfernungsnchtlinienparameterwert eine erste Zeitspanne umfasst; und
durch Anwenden eines gleitenden Fensters zu ermitteln, dass eine Anforderung zum Öffnen des Objekts innerhalb einer Zeitspanne eintritt, die dem gleitenden Fenster entspricht und sich bis nach dem vorangehenden Entfernen des Objekts aus dem lokalen Zwischenspeicher (130) erstreckt; und
den Entfei-nungsrichtlinienparameterwert auf eine Ablaufdauer einer zweiten Zeitspanne festzulegen, die länger als die erste Zeitspanne ist;
oder
zu ermitteln, dass das Objekt vorher aus dem lokalen Zwischenspeicher (130) entfernt wurde, wobei der vorher dem Objekt zugewiesene Entfernungsrichtlinienparameterwert eine Prioritätsgewichtung umfasst, wobei die einem Objekt zugewiesene Prioritätsgewichtung einen Hinweis auf seine Bedeutungspriorität bietet;
und durch Anwenden des gleitenden Fensters zu ermitteln, dass die Anforderung zum Öffnen des Objekts innerhalb einer Zeitspanne eintritt, die dem gleitenden Fenster entspricht und sich bis nach dem vorangehenden Entfernen des Objekts aus dem lokalen Zwischenspeicher (130) erstreckt; und
die vorher dem Objekt zugewiesene Prioritätsgewichtung zu erhöhen, um ihm mehr Priorität zuzuweisen und eine angepasste Prioritätsgewichtung zu erstellen; und
den Entfernungsrichtlinienparameterwert auf die angepasste Prioritätsgewichtung festzulegen.

10. Computersystem nach Anspruch 9, wobei der Prozessor ferner ausgelegt ist:
eine Anforderung zu empfangen, das Objekt zu öffnen;
zu ermitteln, dass das Objekt im lokalen Zwischenspeicher (130) gespeichert ist;
das Objekt aus dem lokalen Zwischenspeicher (130) abzurufen; und
den Entfernungsrichtlinienparameterwert von einem vorher zugewiesenen Wert zu aktualisieren.

11. Computersystem nach Anspruch 9, wobei das Objekt der Prozessor ferner ausgelegt ist:
zu ermitteln, dass eine Verbindung zwischen dem "Back-End-Server" und dem lokalen Zwischenspeicher (130) eine höchste Bandbreite aufweist, wenn das Objekt entfernt wird.

## Revendications

1. Procédé de mise en cache, ledit procédé consistant à :
recevoir un objet en provenance d'un serveur dorsal (110) au niveau d'une mémoire cache locale (130) accessible par un ou plusieurs utilisateurs au niveau d'un site local (120);
joindre une valeur de paramètre de stratégie d'éviction audit objet ;
stocker ledit objet dans ladite mémoire cache locale (130) ;
au niveau de ladite mémoire cache locale (130), évaluer ladite valeur de paramètre de stratégie d'éviction ; et
évincer ledit objet de ladite mémoire cache locale (130) sur la base de ladite valeur de paramètre de stratégie d'éviction ;
le procédé étant **caractérisé en ce que** :
ladite jonction d'une valeur de paramètre de stratégie d'éviction consiste en outre à :
déterminer que ledit objet a été précédemment évincé de ladite mémoire cache locale (130), ladite valeur de paramètre de stratégie d'éviction précédemment affectée audit objet comprenant une première période de temps ;
déterminer, en appliquant une fenêtre glissante, qu'une demande d'ouverture dudit objet se produit dans une période correspondant à ladite fenêtre glissante et s'étendant après ladite éviction précédente dudit objet de ladite mémoire cache locale (130) ; et
fixer ladite valeur de paramètre de stratégie d'éviction sur une période d'expiration d'une seconde période de temps qui est plus longue que ladite première période de temps ;
ou ladite jonction d'une valeur de paramètre de stratégie d'éviction consistant en outre à :
déterminer que ledit objet a été précédemment évincé de ladite mémoire cache locale (130), ladite valeur de paramètre de stratégie d'éviction précédemment affectée audit objet comprenant une pondération de priorité, la pondération de priorité affectée à un objet fournissant une indication sur sa priorité d'importance ;
déterminer, en appliquant ladite fenêtre glissante, que ladite demande d'ouverture dudit objet se produit dans une période correspondant à ladite fenêtre glissante et s'étendant après ladite éviction précédente dudit objet de ladite mémoire cache locale (130) ;
régler plus haut ladite pondération de priorité précédemment affectée audit objet afin de lui affecter une priorité plus élevée, et créer une pondération de priorité réglée ; et fixer ladite valeur de paramètre de stratégie d'éviction sur ladite pondération de priorité réglée.

2. Procédé selon la revendication 1, dans lequel ladite jonction d'une valeur de paramètre de stratégie d'éviction consiste en outre à :
affecter une pondération de priorité audit objet.

3. Procédé selon la revendication 1, consistant en outre à :
recevoir une demande d'ouverture dudit objet ;
déterminer que ledit objet est stocké dans ladite mémoire cache locale (130) ;
récupérer ledit objet dans ladite mémoire cache locale (130) ; et
mettre à jour ladite valeur de paramètre de stratégie d'éviction à partir d'une valeur précédemment affectée.

4. Procédé selon la revendication 1, consistant en outre à :
détecter un événement de déclenchement d'éviction ;
appliquer une première stratégie d'éviction sur une pluralité d'objets stockés dans ladite mémoire cache locale (130) afin de déterminer un objet sélectionné pour être évincé; et
évincer ledit objet sélectionné.

5. Procédé selon la revendication 4, dans lequel ledit événement de déclenchement d'éviction comprend un des événements suivants :
l'atteinte d'une valeur-seuil de capacité de stockage dans ladite mémoire cache locale (130) ;
une expiration d'une période d'expiration; et
la détermination qu'une capacité disponible de ladite mémoire de stockage locale est pleine.

6. Procédé selon la revendication 4, dans lequel ladite application d'une première stratégie d'éviction comprend un des événements suivants :
la détermination d'une expiration d'une période d'expiration associée audit objet sélectionné;
la détermination du fait que ledit objet sélectionné a une pondération de priorité minimale ; et
la détermination du fait que ledit approvisionnement de l'objet sélectionné est assuré au niveau d'un serveur dorsal (110) associé, connecté à ladite mémoire cache locale (130) sur une connexion ayant une bande passante maximale.

7. Procédé selon la revendication 1, dans lequel ledit objet comprend un fichier.

8. Procédé selon la revendication 1, dans lequel ledit objet comprend un dossier-

9. Système informatique, comprenant :
un processeur configuré pour :
recevoir un objet en provenance d'un serveur dorsal (110) au niveau d'une mémoire cache locale (130) accessible par un ou plusieurs utilisateurs au niveau d'un site local (120);
joindre une valeur de paramètre de stratégie d'éviction audit objet ;
stocker ledit objet dans ladite mémoire cache locale (130) ; et
au niveau de ladite mémoire cache locale (130), évaluer ledit paramètre de stratégie d'éviction ; et
évincer ledit objet de ladite mémoire cache locale (130) sur la base de ladite valeur de paramètre de stratégie d'éviction ;
le système informatique étant **caractérisé en ce que**:
ledit processeur, lorsqu'il réalise ladite jonction d'une valeur de paramètre de stratégie d'éviction, est en outre configuré pour :
déterminer que ledit objet a été précédemment évincé de ladite mémoire cache locale (130), ladite valeur de paramètre de stratégie d'éviction précédemment affectée audit objet comprenant une première période de temps ; et
déterminer, en appliquant une fenêtre glissante, qu'une demande d'ouverture dudit objet se produit dans une période correspondant à ladite fenêtre glissante et s'étendant après ladite éviction précédente dudit objet de ladite mémoire cache locale (130) ; et
fixer ladite valeur de paramètre de stratégie d'éviction sur une période d'expiration d'une seconde période de temps qui est plus longue que ladite première période de temps ; ou
déterminer que ledit objet a été précédemment évincé de ladite mémoire cache locale (130), ladite valeur de paramètre de stratégie d'éviction précédemment affectée audit objet comprenant une pondération de priorité, la pondération de priorité affectée à un objet fournissant une indication sur sa priorité d'importance; et déterminer, en appliquant une fenêtre glissante, que ladite demande d'ouverture dudit objet se produit dans une période correspondant à ladite fenêtre glissante et s'étendant après ladite éviction précédente dudit objet de ladite mémoire cache locale (130) ; et
régler plus haut ladite pondération de priorité précédemment affectée audit objet afin de lui affecter une priorité plus élevée, et créer une pondération de priorité réglée ; et
fixer ladite valeur de paramètre de stratégie d'éviction sur ladite pondération de priorité réglée.

10. Système informatique selon la revendication 9, dans lequel ledit processeur est en outre configuré pour :
recevoir une demande d'ouverture dudit objet ;
déterminer que ledit objet est stocké dans ladite mémoire cache locale (130) ;
récupérer ledit objet dans ladite mémoire cache locale (130) ; et
mettre à jour ladite valeur de paramètre de stratégie d'éviction à partir d'une valeur précédemment affectée.

11. Système informatique selon la revendication 9, dans lequel ledit objet ledit processeur est en outre configuré pour :
déterminer qu'une connexion entre ledit serveur dorsal et ladite mémoire cache locale (130) a une bande passante maximale lors de l'éviction dudit objet.
